19 Europäisches Patentamt

European Patent Office

Office européen des brevets

11 Veröffentlichungsnummer: **0 214 369 B1**

12 **EUROPÄISCHE PATENTSCHRIFT**

45 Veröffentlichungstag der Patentschrift: **18.03.92**

51 Int. Cl.5: **A01C 5/06**, A01B 49/06

21 Anmeldenummer: **86106511.8**

22 Anmeldetag: **14.05.86**

54 **Gerätekombination zum Ausbringen von Saatgut.**

30 Priorität: **15.05.85 DE 3517621**

43 Veröffentlichungstag der Anmeldung:
**18.03.87 Patentblatt 87/12**

45 Bekanntmachung des Hinweises auf die
Patenterteilung:
**18.03.92 Patentblatt 92/12**

84 Benannte Vertragsstaaten:
**AT BE CH DE FR GB LI NL**

56 Entgegenhaltungen:
EP-A- 0 049 330    EP-A- 0 075 133
EP-A- 0 102 557    EP-A- 0 121 045
CA-A- 1 178 850    DE-A- 2 359 468
DE-A- 3 337 178    GB-A- 2 001 513
US-A- 4 388 878    US-A- 4 417 530

73 Patentinhaber: **KUHN S.A.**
**4, Impasse des Fabriques**
**F-67706 Saverne Cedex(FR)**

72 Erfinder: **Weichel, Ernst**
**Bahnhofstrasse 1**
**W-7326 Heiningen(DE)**

74 Vertreter: **Patentanwälte Leinweber & Zim-**
**mermann**
**Rosental 7/II Aufg.**
**W-8000 München 2(DE)**

## Beschreibung

Die vorliegende Erfindung betrifft eine Gerätekombination zum Ausbringen von Saatgut und zum nachfolgenden Abdecken des Saatgutes in ein und demselben maschinellen Arbeitsgang, bei dem Erde und/oder Pflanzen bzw. Pflanzenreste mittels einer mit Werkzeuge besetzten rotierenden Welle aufgenommen, über eine als Säschiene gebildete Saatgutverteil- und/oder Dosiervorrichtung hinweg entgegen der Fahrtrichtung gefördert und als Deckschicht auf das auf den abgedeckten Bodenhorizont abgelegte Saatgut aufgebracht wird, wobei das Saatgut von einem Saatgutbehälter mittels einer Zuführungsvorrichtung die Särohre aufweist, zugeführt wird.

Eine solche Gerätekombination ist aus der DE-OS 34 27 501 bekannt. Diese Gerätekombination besteht aus einem sich quer zur Fahrtrichtung erstreckenden Tragrohr mit daran angeordneten Werkzeugen zur Bearbeitung und Förderung der obersten Boden- und/oder Pflanzenschicht, einem Saatgutbehälter und einem ein Säorgan aufweisenden Drillgerät, unter dem, bzw. unter dessen Saatgutbehälter sich ein über die gesamte Arbeitsbreite gesehen freier Raum erstreckt, der oberhalb des bodenseitigen als Säschiene gebildeten Säorganes angeordnet ist.

Bei der bekannten Gerätekombination ist die Säschiene aus einer Anzahl von Saatgutleitungen zusammengesetzt, deren seitliche Enden über Schläuche mit dem Saatgutbehälter verbunden sind. Weil die Saatgutleitungen in einem erheblichen Radius nach oben ansteigen müssen, um Stauungen des durch einen Luftstrom geförderten Saatgutes zu vermeiden, müssen sich die Saatgutleitungen über die seitliche Begrenzung des rotierenden Werkzeugträgers hinaus zur Seite erstrecken. Deshalb kommt es zu Stauungen und eventuell Verstopfungen durch Erde, bzw. auf der Bodenoberfläche liegende Pflanzen, Strohreste usw. im Bereich der seitlichen Begrenzungen des rotierenden Werkzeugträgers, bzw. in dem Bereich der Säschiene, in dem die Saatgutleitungen von ihrem horizontalen in einen schräg ansteigenden Verlauf übergehen.

Aus den Druckschriften EP-A-0 049 330, EP-A-O 102 557, EP-A-O 121 045 und DE-A-33 37 178 ist jeweils eine Gerätekombination zum Ausbringen von Saatgut bekannt mit einer mit Werkzeugen besetzten Welle, die in eine solche Richtung angetrieben ist, daß sie an ihrer Vorderseite nach unten umläuft, einer Säschiene, die derart zu der rotierenden Welle angeordnet ist, daß die von deren Werkzeuge aufgenommene Erde und/oder Pflanzen bzw. Pflanzenreste über die Säschiene hinweg, der Fahrtrichtung entgegen von diesen Werkzeugen gefördert wird bzw. werden, einem Saatgutbehälter und einer vom Saatgutbehälter ausgehenden Saatgutzuführungsvorrichtung, die ein bzw. mehrere nach unten verlaufende Särohre aufweist, deren Ausläufe unter der Säschiene münden.

Aus der EP-A-0 049 330 ist es weiter auch an sich bekannt, die Haltestiele der Säschiene bezogen auf die Fahrtrichtung hinter der rotierenden Welle anzuordnen.

Bei den Gerätekombinationen gemäß EP-A-0 049 330 und der Gerätekombination gemäß EP-A-0 102 557 wird das Saatgut von einer seitlich außerhalb der Durchtrittsöffnung der nach hinten geschleuderten Erde und/oder Pflanzen bzw. Pflanzenreste angeordneten Saatgutzuführungsvorrichtung unter die Säschiene gebracht. Bei dieser Anordnung kommt es zu Stauungen und eventuell Verstopfungen durch Erde bzw. auf der Bodenoberfläche liegende Pflanzenreste in dem Bereich, in dem die Saatgutzuführungsvorrichtung in die Säschiene übergeht.

Bei der Gerätekombination gemäß EP-A-0 121 045 sind dicke Särohre in einem mindestens dem Dreifachen der üblichen Reihenweite entsprechenden Abstand voneinander angeordnet, wobei sich die Mündung jedes Särohres über einer über die ganze Länge der Säschiene reichenden Prallplatte erstreckt. Jedes Särohr wird, vom Saatgutbehälter aus, von einer Zahl von einzelnen Ausgängen beschickt, die der Zahl entsprechenden üblichen Reihen entspricht. Die im dicken Särohr zusammengefügte Saatgutmenge soll dann von der Prallplatte auf den entsprechenden breiten Bereich verteilt werden. Ob hier eine - wie üblich gewünschte - regelmäßige Verteilung erreicht wird, ist äußerst zweifelhaft.

Bei der Gerätekombination gemäß DE-A-33 37 178 weist die rotierende Welle in regelmäßigen Abständen Flansche auf, die zur Befestigung der Werkzeuge dient. Hinter jedem dieser Flansche ist ein Särohr vorgesehen, das unter einer Säschiene mündet, in der ein Prallblech vorgesehen ist. jedes Särohr wird vom Saatgutbehälter aus mit Saatgut beschickt, welches von dem Prallblech auf die entsprechende Breite verteilt wird. Da der Abstand zwischen zwei nachfolgenden Särohren kleiner ist als bei der Gerätekombination nach EP-A-0 121 045, dürfte hier die Verteilung besser sein. Demgegenüber ist aber die Zahl der "Hindernisse" in der Durchtrittsöffnung erheblich größer. Durch die besondere Anordnung der Särohre gegenüber der rotierenden Welle soll zwar die Verstopfungsgefahr verhindert werden. Ob das jedoch in der Praxis geschieht, ist fraglich.

Weiterhin ist aus der US-A-4 388 878 eine Säschar bekannt, die mittels eines Haltestiels an einem Tragrohr befestigt ist. An der rückwärtigen Seite des Haltestiels ist zwar eine Gruppe von drei miteinander gebündelten Rohren angeordnet. Davon dient aber nur ein einziges zum Ausbringen von Saatgut, während die zwei anderen Rohre zum Ausbringen von Düngemittel bzw. Unkrautbekämpfungsmittel dienen. Da diese drei Mittel auf verschiedenen Höhen abgelegt werden müssen, sind die Ausläufe der entsprechenden Rohre auf verschiedenen Höhenlagen und - in der Draufsicht betrachtet - übereinander angeordnet.

Die DE-A-23 59 468 beschreibt (vgl. Fig. 15 und entsprechende Textstellen) eine Gerätekombination zum Ausbringen von Saatgut. Diese bekannte Gerätekombination weist einen als Tragbalken ausgebildeten Rahmen auf, der über eine Anbauvorrichtung mit der Dreipunkthydraulik eines nicht näher dargestellten Schleppers verbunden sein kann und über einen Getriebeanschluß mit z.B. mechanischer Antriebsleistung versorgt wird. Der Tragbalken besteht z.B. aus einzelnen Segmenten, an deren Enden Befestigungsplatten angeordnet sind, die unter Zwischenschaltung von Grindeln (Haltestielen) mittels Befestigungselementen, z.B. Schrauben miteinander verbunden werden. Die Haltestiele sind mit ihren vorderen Enden in der zuvor beschriebenen Weise an dem Tragbalken angebracht, wobei ihre hinteren Enden eine annähernd halbkreisförmige Biegung aufweisen. Am untern Ende dieser halbkreisförmigen Biegung sind Schneid-Hebe-Körper angeordnet, so daß ihre Schare annähernd nebeneinander und unterhalb des Tragbalkens liegen. Die Schneid-Hebe-Körper werden neben den Scharen aus Leitblechen gebildet. An der Hinterkante der Leitbleche befindet sich ein Werkzeugträger in einer annähernd waagerechten Anordnung. Der Werkzeugträger ist an seinen Enden über Lenker mit den Enden des Tragbalkens verbunden und abgestützt, und wird mittels eines Antriebes angetrieben. An dem Werkzeugträger sind, radial zu seiner Drehachse, Werkzeuge angeordnet. Der Werkzeugträger samt seinen Werkzeugen ist von einer Abdeckhaube umgeben.

Oberhalb des Tragbalkens ist ein Saatgutbehälter angeordnet, während sich ein Saatgutverteiler unterhalb der Schneid-Hebe-Körper erstreckt. Das Saatgut wird vom Behälter aus dem Verteiler mittels Zuführrohre zugeführt, die an der rückwärtigen Seite der Haltestiele befestigt sind, wobei das zugeführte Saatgut von dem Verteiler auf der Pflugsohle abgelegt und von den bearbeiteten Bodenteilen bedeckt wird.

Während der Bodenbearbeitung nehmen die Schneid-Hebe-Körper einen Erdbalken über die gesamte Arbeitsbreite oder in einzelnen Reihen auf. Der Erdbalken wird von den Scharen angehoben und von den Leitblechen den Werkzeugen des Werkzeugträgers zugeführt. Durch die Werkzeuge, des Werkzeugträgers erfährt der Erdbalken eine weitere Bearbeitung. Die vom Erdbalken abgetrennten Bodenteile werden zerkleinert, unterhalb des Werkzeugträgers der Pflugsohle zugeführt und bedecken das bereits von dem Verteiler auf dieser Pflugsohle abgelegte Saatgut.

Diese bekannte Gerätekombination weist den Vorteil auf, daß der Erdboden in einem einzigen Arbeitsgang bearbeitet und eingesät werden kann. Ein anderer Vorteil besteht darin, daß die Saatgutablagetiefe sehr regelmäßig ist. Ein weiterer Vorteil ist noch darin zu sehen, daß die Gesamtbreite der Gerätekombination etwa gleich der Arbeitsbreite ist. Dies ist darauf zurückzuführen, daß die Särohre nicht über die Maschinenseiten hinausragen.

Sie weist jedoch auch mehrere Nachteile auf:

Ein erster Nachteil ist darin zu sehen, daß die obere Erdbodenschicht (Erdbalken) mittels einer aus Scharen und Leitblechen gebildeten Vorrichtung aufgenommen wird. Es entstehen dadurch erhebliche Reibungskräfte, die eine große Zugleistung bedingen.

Ein weiterer Nachteil besteht darin, daß sich der aufgenommene Erdbalken vor den Haltestielen stauen kann. Um diesem Problem vorzubeugen, sind zwar runde Schneidseche vor den Grindeln vorgesehen. Diese sind in der Praxis aber nicht immer in der Lage, Verstopfungen zu verhindern. Andererseits verteuern sie die Gerätekombination. Endlich führen sie oft zur Vergrößerung der Baulänge der Konstruktion.

Von Nachteil ist weiterhin, daß die Verteilung des Saatgutes, über die Arbeitsbreite gesehen, sicher nicht optimal sein kann, ohne einen hochwertigen Verteiler.

Ausgehend von diesem Stand der Technik liegt der Erfindung deshalb die Aufgabe zugrunde, eine Gerätekombination zum Ausbringen von Saatgut, unter Beibehaltung mindestens des Vorteils der regelmäßigen Saatgutablagetiefe und des Vorteils einer praktisch gleichbleibenden Gesamtbreite und Arbeitsbreite zu schaffen, bei der die vorstehend genannten Nachteile der bekannten Gerätekombination weitgehend ausgesschaltet sind.

Diese Aufgabe wird gemäß der vorliegenden Erfindung gelöst durch eine Gerätekombination zum Ausbringen von Saatgut und zum nachfolgenden Abdecken des Saatgutes in ein und demselben maschinellen Arbeitsgang mit einem Maschinenrahmen; einer in am Maschinenrahmen angeordneten Lagerschilden gelagerten, mit Werkzeugen besetzten Welle, die in eine solche Richtung antreibbar ist, daß sie an ihrer Vorderseite nach unten umlaufbar ist; einer Säschiene, die am unteren Ende von mit dem Maschinenrahmen verbundenen Haltestielen angebracht ist; einem Saatgutbehälter, und einer vom Saatgutbehälter ausgehenden Saatgutzuführungsvorrichtung, die hinter der rückwärtigen Seite der Haltestiele angeordnete, nach unten verlaufende Särohre aufweist, deren Ausläufe unter der Säschiene münden; wobei die Säschiene derart zu der rotierenden Welle angeordnet ist, daß die von deren Werkzeugen aufgenommene Erde und/oder Pflanzen bzw. Pflanzenreste über die Säschiene hinweg, entgegen der Fahrtrichtung von diesen Werkzeugen förderbar ist; sich die Haltestelle - bezogen auf die Fahrtrichtung - hinter der rotierenden Welle erstrecken; und hinter der rückwärtigen Seite jedes Haltestieles eine Gruppe von miteinander gebündelten Särohren angeordnet ist, deren Ausläufe zur Sicherstellung der Ablage des Saatgutes auf nebeneinander liegenden Bereichen des befreiten Bodenhorizontes - in der Draufsicht - quer zur Fahrtrichtung nebeneinander angeordnet sind.

Bei der erfindungsgemäßen Gerätekombination werden die oberste Bodenschicht und/oder Pflanzen bzw. Pflanzenreste von der rotierenden, mit Werkzeugen besetzen Welle aufgenommen und nach hinten, der Fahrtrichtung entgegen, gefördert. Zusätzlich dreht sich die mit Werkzeugen besetzte Welle in eine solche Richtung, daß sie den Vortrieb in Fahrtrichtung unterstützt. Infolgedessen benötigt die erfindungsgemäße Gerätekombination wenig Zugkraft. Dies ist u.a. darauf zurückzuführen, daß sowohl beim Aufnehmen der Erde und/oder Pflanzen bzw. Pflanzenreste, als auch beim Fördern der aufgenommenen Erde und/oder Pflanzen bzw. Pflanzenreste wenig der Zugkraft entgegenwirkende Reibungskräfte entstehen.

Bei der erfindungsgemäßen Gerätekombination ist ferner vorgesehen, daß sich die Haltestiele, bezogen auf die Fahrtrichtung, hinter der rotierenden Welle erstrecken, und daß hinter der rückwärtigen Seite jedes Haltestieles eine Gruppe von untereinander gebündelten Särohren angeordnet ist. Dank dieser Anordnung kann die erfindungsgemäße Gerätekombination weitgehend verstopfungsfrei arbeiten. Da sich die Haltestiele hinter der rotierenden Welle erstrecken, werden die Erde und/oder die Pflanzen bzw. Pflanzenreste von den Werkzeugen der rotierenden Welle an den Haltestielen mit Geschwindigkeit vorbei geworfen. Da zusätzlich hinter der rückwärtigen Seite jedes Haltestieles eine Gruppe von miteinander gebündelter Särohre angeordnet ist, ist nur eine geringe Zahl von Haltestielen nötig, so daß die "Hindernisse" in der durch die Säschiene und die zur Lagerung der rotierenden Welle im Maschinenrahmen vorgesehenen seitlichen Lagerschilde gebildeten Durchtrittsöffnung minimal sind.

Bei der erfindungsgemäßen Gerätekombination ist endlich auch noch vorgesehen, daß die Ausläufe der Särohre jeder Gruppe seitlich derart zueinander angeordnet sind, daß das Saatgut auf nebeneinander liegenden Bereichen des befreiten Bodenhorizontes abzulegen ist. Da die einzelnen Särohre beibehalten worden sind, ist sichergestellt, daß die bereits vorgenommene Dosierung des Saatgutes (im allgemeinen am Ausgang des Saatgutbehälters) ebenfalls beibehalten bleibt. Durch die seitliche Versetzung der verschiedenen Ausläufe der in einer Gruppe miteinander gebündelter Särohre, ist dann sichergestellt, daß das dosierte Saatgut exakt an der richtigen Stelle abgegeben wird. So wird auf einfache Weise eine exakte Ausbringung des Saatgutes erreicht.

Weitere Merkmale der Erfindung sind in Unteranprüchen enthalten.

Die Erfindung wird im folgenden anhand der Zeichnungen näher erläutert.

Es zeigen:

Fig. 1 eine erfindungsgemässe Gerätekombination in der schematischen Teilseitensicht, und

Fig. 2 die gleiche Gerätekombination in der Schematischen Teildraufsicht, im Schnitt gemäss II-II in Fig. 11

Wie die Figuren zeigen, besteht die Gerätekombination aus einem Maschinenrahmen (1), an dessen seitlichen Enden Lagerschilde (2) angeordnet sind. In diesen Lagerschilde (2) ist eine rotierende Welle (5) gelagert, die mittels nicht dargestellten aber vom Fachmann bekannten Antriebselementen in die Richtung (3) angetrieben wird, d.h. dass an der Vorderseite die rotierende Welle (5) sich nach unten dreht. An der rotierende Welle (5) sind als Fräsmesser (6) gebildete Werkzeuge befestigt, die Bewegungsbahnen (7) beschreiben.

Der Maschinenrahmen (1) weist weiter einen nicht dargestellten Anbaubock auf, mittels dem die Gerätekombination an einem Schlepper angebaut werden kann. In einer bekannten Weise wird auch die rotierende Welle (5), sowie alle drehende Teile der Gerätekombination von der Schlepperzapfwelle aus angetrieben.

Am Maschinenrahmen (1) ist ein nicht dargestellter Saatgutbehälter mit einer Saatgutdosiervorrichtung befestigt, der das Saatgut (37) einer Säschiene (12) zuführt. Die Säschiene (12) ist unter der rückwärtigen Seite der rotierenden Welle (5) angeordnet. Sie ist am unteren Ende von Haltestiele (23) angebracht. Die Haltestiele (23) sind abnehmbar in Stielhaltern (32) befestigt, die an mit dem Maschinengestell (1) verbundenen Platten (33) angebracht sind.

Hinter der rückwärtigen Seite (22) jedes Haltestieles (23) ist eine Gruppe (4) miteinander gebündelter aus starrem Material gebildeten Särohre (11, 111, 112) angeordnet, die nach unten Verlaufen und deren Ausläufe (25, 251, 252) unter der Säschiene (12) münden. An ihrem oberen Ende, sind die Särohre (11, 111, 112) mit flexiblen Säleitungen (10) verbunden, die das Saatgut (37) von dem Säbehälter den Särohre (11, 111, 112) zuführen. Jede Gruppe (4) von miteinander gebündelter Sarohre (11, 111, 112) beschickt einen Abschnitt (20) der Säschiene (12). In dem dargestellten Ausführungsbeispiel weist jede Gruppe (4) drei zusammengebündelte Särohre (11, 111, 112) auf.

Jede Gruppe (4) von miteinander gebündelte Särohre (11, 111, 112) ist an der rückwärtigen Seite (22) von einem Haltestiel (23) mittels Schweissen befestigt. In dem dargestellten Ausführungsbeispiel weist jede Gruppe (4) zwei vordere (11, 111) und ein hinteres Särohr (112) auf. Die zwei vorderen Särohren (11, 111) sind neben einander angeordnet und sind durch abgeflachte Rohren gebildet, damit ihre gesamte Breite etwa gleich der Breite der rückwärtigen Seite (22) des Haltestieles (23) ist. Das hintere Särohr (112) ist an den zwei vorderen Särohre (11, 111) angeschweisst.

Der untere Bereich (26, 261) der zwei vorderen Särohre (11, 111), der sich unter der Säschiene (12) befindet, ist etwa um 90° abgewinkelt, sodass der untere Bereich (26) des linken Särohrs (11) nach links abgewinkelt ist, und der untere Bereich (261) des rechten Särohrs (111) nach rechts abgewinkelt ist. Die abgewinkelten unteren Bereiche (26, 261) der Särohre (11, 111) erstrecken sich somit etwa horizontal und quer, vorzugsweise senkrecht zur Arbeitsrichtung (27).

An ihren Enden (29, 291) sind die abgewinkelten unteren Bereiche (26, 261) der vorderen Särohre (11, 111) schräg abgeschnitten um die Särohrausläufe (25, 251) zu bilden.

Die Särohrausläufe (25, 251) der vorderen Särohre (11, 111) sind somit schräg nach hinten aussen orientiert. Jedem Särohrauslauf (25, 251) der vorderen Särohre (11, 111) ist ein Prallblech (30, 301) zugeordnet, das mit der Ebene des Särohrauslaufs (25, 251) einen Winkel bildet, der in dem Ausführungsbeispiel etwa 90° hat.

Das hintere Särohr (112) erstreckt sich gerade nach unten. An seinem unteren Ende (292) ist das Särohr (112) ebenfalls schräg abgeschnitten um den Särohrauslauf (252) zu bilden. Der Särohrauslauf (252) des hinteren Särohrs (112) ist gegen den Boden orientiert und verläuft schräg nach hinten oben. Diesem Särohrauslauf (252) ist ebenfalls ein Prallblech (302) zugeordnet, das mit der Ebene des Särohrauslaufes (252) ein Winkel bildet.

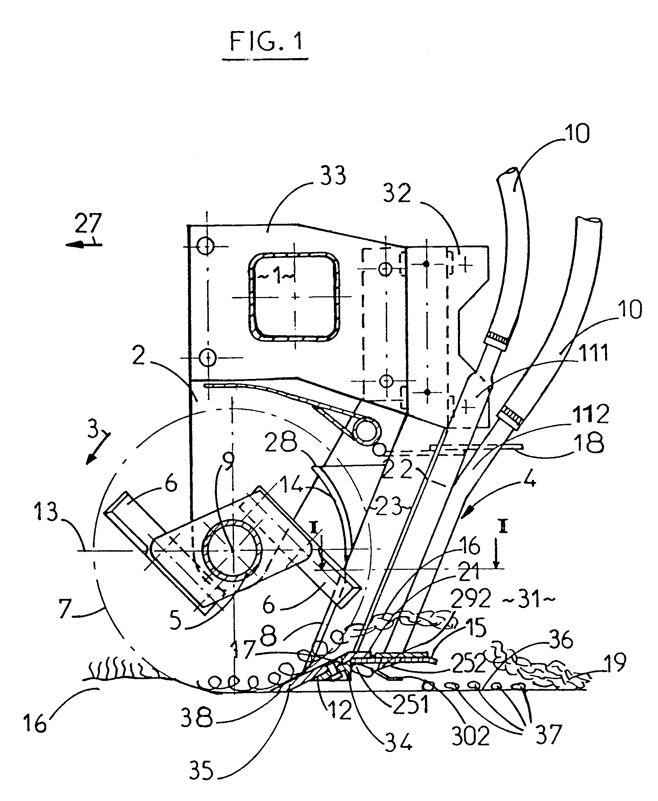

Am unteren Ende jedes Haltestieles (23) ist eine Traverse (34) angeschweisst. Wie aus Figur 1 ersichtlich ist, hat die Traverse (34) die Form eines Keils, der eine nach vorn unten geneigte Oberfläche (17) besitzt. Auf der Oberfläche (17) der Traverse (34) ist eine Breitschar (35) angeschraubt, die auch nach vorn unten verläuft. Es ist auch ersichtlich, dass jeder Haltestiel (23) etwa in der Mitte seiner zugeordneten Breitschar (35) angeordnet ist. Die Vorderkante (38) der Breitschar (35) ist scharf, und ihren hinteren Rand (21) verläuft etwa horizontal. Dieser hintere Rand (21) der Breitschar (35) trägt eine Abdeckhaube (15), die aus Blech und/oder elastischem Material gebildet ist.

Jede von einem Haltestiel (23) mit Särohre (11, 111, 112), Traverse (34), Breitschar (35) und Abdeckhaube (15) gebildete Einheit, bildet einen Säschienenabschnitt (20). Die Abschnitte(20) oder genauer die Breitschare (35) sind etwa aneinanderliegend angeordnet und bilden somit die durchgehende Säschiene (12).

Die Säschiene (12) bildet die untere Begrenzung einer seitlich von den Lagerschilden (2) begrenzten Durchtrittsöffnung (31) durch welche die von den Fräsmessern (6) abgelöste obere Bodenschicht (16) zusammen mit etwa vorhandenen Pflanzen oder Pflanzenresten über die Säschiene (12) und unterhalb eines Ablenkbleches (18), das seine Wurfbahn beeinflussen kann und seitlich an den Haltestielen (23) vorbei nach hinten geworfen wird. Das ausgeworfene Erdpflanzengemisch (19) wird vor oder hinter einer nicht dargestellten Pakkerwalze auf das auf den von seiner obersten Bodenschicht (16) befreiten, selbst unverändert gebliebenen Horizont (36) abgelegte Saatgut (37) ausgeworfen.

Die Haltestiele (23) verlaufen schräg nach vorn unten. Die Vorderkante (8) der Haltestiele (23) erstreckt sich somit zwischen dem hinteren Teil der Bewegungsbahnen (7) der in der Nähe der Haltestiele (23) liegende rotierenden Fräsmesser (6), die dadurch alle Ansammlungen von Pflanzen bzw. Pflanzenreste an den Haltestiele (23) verhindern. Zu diesem Zweck weist auch die über der durch die Längsachse (9) der rotierenden Welle (5) gehende horizontalen Ebene (13) liegende Vorderkante (8) der Haltestiele (23) ein Abstreifer (28) auf. Die Vorderkante (14) der Abstreifer (28) erstreckt sich etwa konzentrisch zur rotierenden Welle (5) und ebenfalls zwischen der Bewegungsbahnen (7) der in der Nähe der Haltestiele (23) liegende Fräsmesser (6).

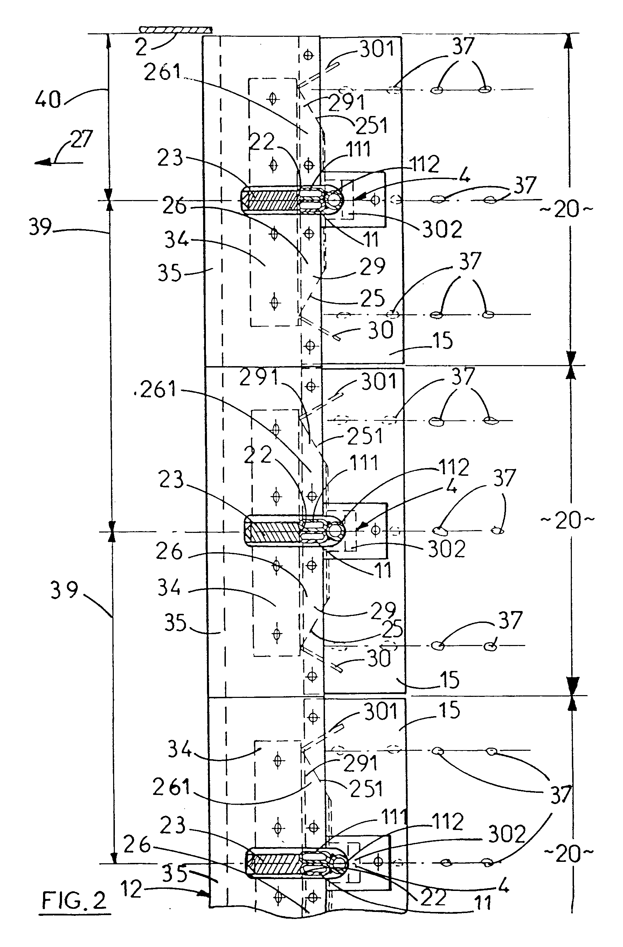

Endlich ist aus der Figur 2 zu sehen, dass die Haltestiele (23) etwa mit gleichem Abstand (39) zueinander angeordnet sind.

Weiter sieht man noch, dass die äusseren Haltestiele (23) mit einem Abstand (40) von den Lagerschilden (2) entfernt liegen, der etwa halb so gross ist, als der Abstand (39) zwischen zwei nachfolgende Haltestiele (23).

Die erfindungsgemässe Gerätekombination arbeitet in folgender Weise. Während der Arbeit wird die Maschine von einem Schlepper an dem sie angebaut ist, in die Richtung (27) gezogen. Die Zapfwelle des Schleppers treibt die rotierende Welle (5) sowie die aufgesattelte Saatgutmaschine an. Bei der Umdrehung in Richtung (3) und Vorwärtsbewegung der Maschine, fräsen die Fräsmesser (6) eine Boden- und/oder Pflanzenschicht (16) ab und werfen sie nach hinten über die Säschiene (12) und an den Haltestiele (23) vorbei, dank der schmalen Breite der Haltestiele (23).

Gleichzeitig führt die Saatgutmaschine den Särohren (11, 111, 112) Saatgut (37) zu. An den Särohrausläufe (25, 251, 252) prallen die Saatkörner (37) auf die Prallbleche (30, 301, 302), werden dann auf das Bodenhorizont (36) abgelegt und schliesslich von dem Erdpflanzengemisch (19) überdeckt.

**Patentansprüche**

1. Gerätekombination zum Ausbringen von Saatgut (37) und zum nachfolgenden Abdecken des Saatgutes in ein und demselben maschinellen Arbeitsgang mit:
    - einem Maschinenrahmen (1),
    - einer in am Maschinenrahmen (1) angeordneten Lagerschilden (2) gelagerten, mit Werkzeugen (6) besetzten Welle (5), die in eine solche Richtung (3) antreibbar ist, daß sie an ihrer Vorderseite nach unten umlaufbar ist,
    - einer Säschiene (12), die am unteren Ende von mit dem Maschinenrahmen (1) verbundenen Haltestielen (23) angebracht ist,
    - einem Saatgutbehälter, und
    - einer vom Saatgutbehälter ausgehenden Saatgutzuführungsvorrichtung (10, 11, 111, 112), die hinter der rückwärtigen Seite (22) der Haltestiele (23) angeordnete, nach unten verlaufende Särohre (11, 111, 112) aufweist, deren Ausläufe (25, 251, 252) unter der Säschiene (12) münden, dadurch gekennzeichnet,
    - daß die Säschiene (12) derart zu der rotierenden Welle (5) angeordnet ist, daß die von deren Werkzeugen (6) aufgenommene Erde und/oder Pflanzen bzw. Pflanzenreste über die Säschiene (12) hinweg, entgegen der Fahrtrichtung (27) von diesen Werkzeugen (6) förderbar ist,
    - daß sich die Haltestiele (23) - bezogen auf die Fahrtrichtung (27) - hinter der rotierenden Welle (5) erstrecken, und
    - daß hinter der rückwärtigen Seite (22) jedes Haltestieles (23) eine Gruppe (4) von miteinander gebündelten Särohren (11, 111, 112) angeordnet ist, deren Ausläufe (25, 251, 252) zur Sicherstellung der Ablage des Saatgutes (37) auf nebeneinander liegenden Bereichen des befreiten Bodenhorizontes (36) - in der Draufsicht - quer zur Fahrtrichtung nebeneinander angeordnet sind.

2. Gerätekombination nach Anspruch 1, dadurch gekennzeichnet, daß die Särohre (11, 111, 112) an der rückwärtigen Seite (22) der Haltestiele (23) befestigt sind.

3. Gerätekombination nach Anspruch 1 oder 2, dadurch gekennzeichnet, daß die Haltestiele (23) etwa in gleichem Abstand (39) zueinander angeordnet sind.

4. Gerätekombination nach mindestens einem der vorhergehenden Ansprüche, dadurch gekennzeichnet, daß die äußeren Haltestiele (23) in einem Abstand (40) von den Lagerschilden (2) angeordnet sind.

5. Gerätekombination nach Anspruch 4, dadurch gekennzeichnet, daß der Abstand (40) zwischen einem äußeren Haltestiel (23) und seinem zugeordneten Lagerschild (2) etwa halb so groß ist wie der Abstand (39) zwischen zwei nachfolgenden Haltestielen (23).

6. Gerätekombination nach mindestens einem der vorhergehenden Ansprüche, dadurch gekennzeichnet, daß der untere Bereich (26, 261) von mindestens einem Särohr (11, 111) abgewinkelt ist, sodaß der untere abgewinkelte Bereich (26, 261) sich etwa horizontal und quer zur Fahrtrichtung (27) erstreckt.

7. Gerätekombination nach Anspruch 6, dadurch gekennzeichnet, daß der untere abgewinkelte Bereich (26, 261) sich etwa senkrecht zur Fahrtrichtung (27) erstreckt.

8. Gerätekombination nach mindestens einem der vorhergehenden Ansprüche, dadurch gekennzeichnet, daß der Särohrauslauf (25, 251, 252) schräg abgeschnitten ist.

9. Gerätekombination nach einem der Ansprüche 6 oder 7, und dem Anspruch 8, dadurch gekennzeichnet, daß der Särohrauslauf (25, 251) mindestens eines einen unteren abgewinkelten Bereich aufweisenden Särohrs (11, 111) schräg nach hinten außen gerichtet ist.

10. Gerätekombination nach Anspruch 8, dadurch gekennzeichnet, daß der Särohrauslauf (252) mindestens eines Särohrs (112) gegen den Boden gerichtet ist und schräg nach hinten oben verläuft.

11. Gerätekombination nach mindestens einem der vorhergehenden Ansprüche, dadurch gekennzeichnet, daß jedem Särohrauslauf (25, 251, 252) ein Prallblech (30, 301, 302) zugeordnet ist.

12. Gerätekombination nach Anspruch 11, dadurch gekennzeichnet, daß das Prallblech (30, 301, 302) mit der Ebene des Särohrauslaufs (25, 251, 252) einen Winkel bildet.

13. Gerätekombination nach mindestens einem der vorhergehenden Ansprüche, dadurch gekennzeichnet, daß jede Särohrgruppe (4) mindestens zwei nebeneinander angeordnete Särohre (11, 111) aufweist.

14. Gerätekombination nach Anspruch 13, dadurch gekennzeichneet, daß die nebeneinander angeordneten Särohre (11, 111) abgeflacht sind.

15. Gerätekombination nach Anspruch 14, dadurch gekennzeichnet, daß die gesamte Breite der nebeneinander angeordneten Särohre (11, 111) etwa gleich der Breite der rückwärtigen Seite (22) des zugeordneten Haltestiels (23) ist.

16. Gerätekombination nach einem der Ansprüche 13, 14 oder 15, und einem der Ansprüche 6 oder 7, dadurch gekennzeichnet, daß der untere Bereich (26) eines Särohrs (11) von zwei nebeneinander angeordneten Särohren (11, 111) nach einer Seite abgewinkelt ist, und der untere Bereich (261) des anderen Särohrs (111) der zwei nebeneinander angeordneten Särohre (11, 111) nach der anderen Seite abgewinkelt ist.

17. Gerätekombination nach einem der Ansprüche 13 bis 16, dadurch gekennzeichnet, daß jede Särohrgruppe (4) drei Särohre (11, 111, 112) besitzt, und zwar zwei vordere, die nebeneinander liegen, und ein hinteres.

18. Gerätekombinaton nach mindestens einem der vorhergehenden Ansprüche, dadurch gekennzeichnet, daß die Särohre (11, 111, 112) aus starrem Material gebildet und an ihren oberen Enden mit flexiblen Säleitungen (10) verbunden sind.

19. Gerätekombination nach mindestens einem der vorhergehenden Ansprüche, dadurch gekennzeichnet, daß an dem unteren Ende der Haltestiele (23) eine Traverse (34) befestigt ist.

20. Gerätekombination nach Anspruch 19, dadurch gekennzeichnet, daß jeder Haltestiel (23) eine Traverse (34) aufweist.

21. Gerätekombination nach Anspruch 19 oder 20, dadurch gekennzeichnet, daß die Traverse (34) die Form eines Keils hat, der eine nach vor unten geneigte Oberfläche (17) besitzt.

22. Gerätekombination nach Anspruch 19, 20 oder 21, dadurch gekennzeichnet, daß eine Breitschar (35) auf der Oberfläche (17) der Traverse (34) befestigt ist.

23. Gerätekombination nach mindestens einem der Ansprüche 19 bis 22, dadurch gekennzeichnet, daß jedem Haltestiel (23) eine Breitschar (35) zugeordnet ist.

24. Gerätekombination nach Anspruch 23, dadurch gekennzeichnet, daß der Haltestiel (23) etwa in der Mitte der zugeordneten Breitschar (35) angeordnet ist.

25. Gerätekombination nach Anspruch 22, 23 oder 24, dadurch gekennzeichnet, daß die Breitschar (35) nach vorn unten geneigt verläuft.

26. Gerätekombination nach mindestens einem der Ansprüche 22 bis 25, dadurch gekennzeichnet, daß die Vorderkante (38) der Breitschar (35) scharf ist.

27. Gerätekombination nach mindestens einem der Ansprüche 22 bis 26, dadurch gekennzeichnet, daß der hintere Rand (21) der Breitschar (35) etwa horizontal verläuft.

28. Gerätekombination nach mindestens einem der Ansprüche 22 bis 27, dadurch gekennzeichnet, daß der hintere Rand (21) der Breitschar (35) eine Abdeckhaube (15) trägt.

29. Gerätekombination nach Anspruch 28, dadurch gekennzeichnet, daß die Abdeckhaube (15) zumindest teilweise aus Blech gebildet ist.

30. Gerätekombination nach Anspruch 28, dadurch gekennzeichnet, daß die Abdeckhaube (15) zumindest teilweise aus elastischem Material gebildet ist.

31. Gerätekombination nach mindestens einem der Ansprüche 22 bis 30, dadurch gekennzeichnet, daß die Breitschar (35) an der Traverse (34) mittels Schrauben befestigt ist.

32. Gerätekombination nach mindestens einem der Ansprüche 24 bis 31, und Anspruch 23, dadurch gekennzeichnet, daß die Breitscharen (35) etwa aneinanderliegend angeordnet sind.

33. Gerätekombination nach mindestens einem der vorhergehenden Ansprüche, dadurch gekennzeichnet, daß die Vorderkante (8) der Haltestiele (23) sich zwischen dem hinteren Teil der Bewegungsbahnen (7) der in der Nähe der Haltestiele (23) angeordneten Werkzeuge (6) erstrecken.

34. Gerätekombination nach Anspruch 33, dadurch gekennzeichnet, daß die Haltestiele (23) schräg nach vorn unten verlaufen und daß mindestens der über der durch die Längsachse (9) der rotierenden Welle (5) gehenden horizontalen Ebene (13) liegende Teil der Vorderkante (8) der Haltestiele (23) einen Abstreifer (28) aufweist, dessen Vorderkante (14) sich ebenfalls zwischen den Bewegungsbahnen (7) der in der Nähe der Haltestiele (23) angeordneten Werkzeuge (6) erstreckt.

35. Gerätekombination nach Anspruch 34, dadurch gekennzeichnet, daß sich die Vorderkante (14) der Abstreifer (28) etwa konzentrisch zur rotierenden Welle (5) erstreckt.

36. Gerätekombination nach mindestens einem der vorhergehenden Ansprüche, dadurch gekennzeichnet, daß die Haltestiele (23) abnehmbar mit dem Maschinenrahmen (1) verbunden sind.

## Claims

1. A device combination for delivering seed (37) and subsequently covering the seed in one and the same mechanical operating step comprising:
   - a machine frame (1),
   - a shaft (5) which is mounted in bearing plates (2) arranged on the machine frame (1) and which is equipped with tools (6) and which can be driven in such a direction (3) that its front side may move downwardly,
   - a seeding bar (12) which is arranged at the lower end of support beams (23) connected to the machine frame (1)
   - a seed container and
   - a seed supply device (10, 11, 111, 112) which commences from the seed container and which comprises downwardly extending seeding pipes (11, 111, 112) which are arranged behind the rear side (22) of the support beams (23) and the outlets (25, 251, 252) of which open beneath the seeding bar (12), characterised in that
   - the seeding bar is disposed in relation to the rotating shaft (5) in such manner that the earth and/or plants or plant residues picked up by the tools (6) of said shaft can be conveyed across the seeding bar (12) by said tools (6) in the opposite direction to the direction of movement (27),
   - the support beams (23) - in relation to the direction of movement (27) - extend behind the rotating shaft (5) and
   - behind the rear side (22) of each support beam (23) is arranged a group (4) of bunched seeding pipes (11, 111, 112), the outlets (25, 251, 252) of which - considered in a plan view - are arranged one beside another transversely to the direction of movement in order to ensure that the seed (37) is deposited on juxtaposed zones of the exposed ground surface (36).

2. A device combination as claimed in Claim 1, characterised in that the seeding pipes (11, 111, 112) are attached to the rear side (22) of the support beams (23).

3. A device combination as claimed in Claim 1 or 2, characterised in that the support beams (23) are arranged at approximately equal distances (39) from one another.

4. A device combination as claimed in at least one of the preceding claims, characterised in that the outer support beams (23) are arranged at a distance (40) from the bearing plates (2).

5. A device combination as claimed in Claim 4, characterised in that the distance (40) between an outer support beam (23) and its assigned bearing plate (2) is approximately half the magnitude of the distance (39) between two following support beams (23).

6. A device combination as claimed in at least one of the preceding claims, characterised in that the lower region (26, 261) of at least one seeding pipe (11, 111) is angled in such manner that the lower, angled zone (26, 261) extends approximately horizontally and transversely to the direction of movement (27).

7. A device combination as claimed in Claim 6, characterised in that the lower, angled zone (26, 261) extends approximately at right angle to the direction of movement (27).

8. A device combination as claimed in at least one of the preceding claims, characterised in that the seeding pipe outlet (25, 251, 252) is cut off obliquely.

9. A device combination as claimed in one of Claims 6 or 7 and Claim 8, characterised in that the seeding pipe outlet (25, 251) of at least one seeding pipe (11, 111) comprising a lower, angled zone extends obliquely rearwards and outwards.

10. A device combination as claimed in Claim 8, characterised in that the seeding pipe outlet (252) of at least one seeding pipe (112) is directed towards the ground and extends obliquely rearwards and upwards.

11. A device combination as claimed in at least one of the preceding claims, characterised in that each seeding pipe outlet (25, 251, 252) is assigned a baffle plate (30, 301, 302).

12. A device combination as claimed in Claim 11, characterised in that the baffle plate (30, 301, 302) forms an angle with the plane of the seeding pipe outlet (25, 251, 252).

13. A device combination as claimed in at least one of the preceding claims, characterised in that each group (4) of seeding pipes comprises at least two seeding pipes (11, 111) arranged beside one another.

14. A device combination as claimed in Claim 13, characterised in that the seeding pipes (11, 111) arranged beside one another are flattened.

15. A device combination as claimed in Claim 14, characterised in that the entire breadth of the seeding pipes (11, 111) arranged beside one another is approximately equal to the breadth of the rear side (22) of the assigned support beam (23).

16. A device combination as claimed in one of the Claims 13, 14 or 15 and one of Claims 6 or 7, characterised in that the lower zone (26) of one (11) of two seeding pipes (11, 111) arranged beside one another is angled towards one side, and the lower zone (261) of the other (111) of the two seeding pipes (11, 111) arranged beside one another is angled towards the other side.

17. A device combination as claimed in one of Claims 13 to 16, characterised in that each group (4) of seeding pipes is composed of three seeding pipes (11, 111, 112), these comprising two front seeding pipes arranged beside one other and one rear seeding pipe.

18. A device combination as claimed in at least one of the preceding claims, characterised in that the seeding pipes (11, 111, 112) are formed from rigid material and at their upper ends are connected to flexible seed tubes (10).

19. A device combination as claimed in at least one of the preceding claims, characterized in that a crossbar (34) is attached to the lower end of the support beams (23).

20. A device combination as claimed in Claim 19, characterised in that each support beam (23) comprises a crossbar (34).

21. A device combination as claimed in Claim 19 or 20, characterised in that the crossbar (34) has the form of a wedge which has a forwardly and downwardly inclined upper surface (17).

22. A device combination as claimed in Claim 19, 20 or 21, characterised in that a share (35) is attached to the upper surface (17) of the crossbar (34).

23. A device combination as claimed in at least one of Claims 19 to 22, characterised in that each support beam (23) is assigned a share (35).

24. A device combination as claimed in Claim 23, characterised in that the support beam (23) is arranged approximately in the middle of the assigned share (35).

25. A device combination as claimed in Claim 22, 23 or 24, characterised in that the share (35) is inclined forwards and downwards.

26. A device combination as claimed in at least one of Claims 22 to 25, characterised in that the front edge (38) of the share (35) is sharp.

27. A device combination as claimed in at least one of Claims 22 to 26, characterised in that the rear edge (21) of the share (35) extends approximately horizontally.

28. A device combination as claimed in at least one of Claims 22 to 27, characterised in that the rear edge (21) of the share (35) bears a covering hood (15).

29. A device combination as claimed in Claim 28, characterised in that the covering hood (15) is formed at least partially from sheet metal.

30. A device combination as claimed in Claim 28, characterised in that the covering hood (15) is formed at least partially from elastic material.

**31.** A device combination as claimed in at least one of Claims 22 to 30, characterised in that the share (35) is attached to the crossbar (34) by means of screws.

**32.** A device combination as claimed in at least one of Claims 24 to 31 and Claim 23, characterised in that the shares (35) are arranged approximately abutting against one another.

**33.** A device combination as claimed in at least one of the preceding claims, characterised in that the front edge (8) of the support beams (23) extends between the rear part of the movement paths (7) of the tools (6) arranged in the vicinity of the support beams (23).

**34.** A device combination as claimed in Claim 33, characterised in that the support beams (23) extend obliquely forwards and downwards and that at least that part of the front edge (8) of the support beams (23) which is located above the horizontal plane (13) passing through the longitudinal axis (9) of the rotating shaft (5) comprises a scraper (28), the front edge (14) of which likewise extends between the movement paths (7) of the tools (6) arranged in the vicinity of the support beams (23).

**35.** A device combination as claimed in Claim 34, characterised in that the front edge (14) of the scraper (28) extends approximately concentrically with the rotating shaft (5).

**36.** A device combination as claimed in at least one of the preceding claims, characterised in that the support beams (23) are removably connected to the machine frame (1).

**Revendications**

**1.** Machine combinée pour le dépôt puis le recouvrement de semences (37) en un seul et même passage constituée par :
- un châssis (1),
- un arbre (5) muni d'outils (6) et guidé dans des parois (2) du châssis (1), qui peut être entrainé dans une direction (3) telle qu'à l'avant il puisse tourner vers le bas,
- une barre d'ensemencement (12) implantée à l'extrémité inférieure de fûts porteurs (23) liés au châssis (1),
- une trémie à semences, et
- un dispositif (10, 11, 111, 112) d'acheminement de la semence partant de la trémie à semences et comportant des conduites d'ensemencement (11, 111, 112) s'étendant vers le bas, qui sont agencées derrière la partie arrière (22) des fûts porteurs (23) et dont les sorties (25, 251, 252) débouchent sous la barre d'ensemencement (12),

caractérisée par le fait :
- que la barre d'ensemencement (12) est agencée de telle manière par rapport à l'arbre rotatif (5), que la terre et/ou les plantes, respectivement les résidus végétaux ramassés par les outils (6) de l'arbre (5), puissent être déplacés par ces outils (6) dans la direction opposée à la direction d'avance (27), en passant par-dessus la barre d'ensemencement (12),
- que les fûts porteurs (23) s'étendent - compte tenu de la direction d'avance (27) - derrière l'arbre rotatif (5), et
- que derrière la partie arrière (22) de chaque fût porteur (23) est agencé un groupe (4) de conduites d'ensemencement (11, 111, 112), dont les sorties (25, 251, 252) sont - en vue de dessus - agencées côte à côte transversalement à la direction d'avance, pour garantir le dépôt des semences (37) sur des zones adjacentes de la surface du sol (36) ainsi dégagée.

**2.** Machine combinée selon la revendication 1, caractérisée par le fait que les conduites d'ensemencement (11, 111, 112) sont fixées sur la partie arrière (22) des fûts porteurs (23).

**3.** Machine combinée selon la revendication 1 ou 2, caractérisée par le fait que les fûts porteurs (23) sont disposés à une distance (39) à peu près égale les uns des autres.

**4.** Machine combinée selon l'une au moins des revendications précédentes, caractérisée par le fait que les fûts porteurs extérieurs (23) sont placés à une distance (40) des parois latérales (2).

**5.** Machine combinée selon la revendication 4, caractérisée par le fait que la distance (40) entre un fût porteur extérieur (23) et sa paroi latérale (2) correspondante équivaut à peu près à la moitié de la distance (39) séparant deux fûts porteurs (23) consécutifs.

**6.** Machine combinée selon l'une au moins des revendications précédentes, caractérisée par le fait que la partie inférieure (26, 261) de l'une au moins des conduites d'ensemencement (11, 111) est coudée et s'étend, de ce fait, à peu près horizontalement et transversalement par rapport à la direction d'avance (27).

**7.** Machine combinée selon la revendication 6, caractérisée par le fait que la partie inférieure coudée (26, 261) s'étend à peu près perpendiculairement par rapport à la direction d'avance (27).

**8.** Machine combinée selon l'une au moins des revendications précédentes, caractérisée par le fait que la sortie (25, 251, 252) de la conduite d'ensemencement est coupée en biais.

**9.** Machine combinée selon l'une des revendications 6 ou 7 et la revendication 8, caractérisée par le fait que la sortie (25, 251) de l'une au moins des conduites d'ensemencement (11, 111), dont la partie inférieure est coudée, est dirigée transversalement vers l'arrière et vers l'extérieur.

**10.** Machine combinée selon la revendication 8, caractérisée par le fait que la sortie (252) de l'une au moins des conduites d'ensemencement (112) est dirigée vers le sol et est inclinée vers l'arrière et vers le haut.

**11.** Machine combinée selon l'une au moins des revendications précédentes, caractérisée par le fait qu'à chaque sortie (25, 251, 252) d'une conduite d'ensemencement est associée une tôle déflectrice (30, 301, 302).

**12.** Machine combinée selon la revendication 11, caractérisée par le fait que la tôle déflectrice (30, 301, 302) forme un angle avec le plan de la sortie (25, 251, 252) de la conduite d'ensemencement.

**13.** Machine combinée selon l'une au moins des revendications précédentes, caractérisée par le fait que chaque groupe (4) de conduites d'ensemencement comporte au moins deux conduites d'ensemencement (11, 111) disposées l'une à côté de l'autre.

**14.** Machine combinée selon la revendication 13, caractérisée par le fait que les conduites d'ensemencement (11, 111) disposées les unes à côté des autres sont aplaties.

**15.** Machine combinée selon la revendication 14, caractérisée par le fait que la largeur totale des conduites d'ensemencement (11, 111) disposées côte à côte est environ égale à la largeur de la partie arrière (22) du fût porteur (23) correspondant.

**16.** Machine combinée selon l'une des revendications 13, 14 ou 15 et l'une des revendications 6 ou 7, caractérisée par le fait que la partie inférieure (26) de l'une (11) de deux conduites d'ensemencement (11, 111) montées côte à côte est coudée vers un côté et que la partie inférieure (261) de l'autre conduite (111) des deux conduites d'ensemencement (11, 111) est coudée vers l'autre côté.

**17.** Machine combinée selon l'une des revendications 13 à 16, caractérisée par le fait que chaque groupe (4) de conduites d'ensemencement est constitué par trois conduites d'ensemencement (11, 111, 112), dont deux sont situées côte à côte à l'avant et la troisième à l'arrière.

**18.** Machine combinée selon l'une au moins des revendications précédentes, caractérisée par le fait que les conduites d'ensemencement (11, 111, 112) sont réalisées dans un matériau rigide et sont liées à leur extrémité supérieure à des tuyaux d'ensemencement (10) flexibles.

**19.** Machine combinée selon l'une au moins des revendications précédentes, caractérisée par le fait qu'une traverse (34) est fixée à l'extrémité inférieure des fûts porteurs (23).

**20.** Machine combinée selon la revendication 19, caractérisée par le fait que chaque fût porteur (23) est muni d'une traverse (34).

**21.** Machine combinée selon l'une des revendications 19 ou 20, caractérisée par le fait que la traverse (34) a la forme d'un coin présentant une surface supérieure (17) inclinée vers l'avant et vers le bas.

**22.** Machine combinée selon la revendication 19, 20 ou 21, caractérisée par le fait qu'un soc (35) est fixé sur la surface supérieure (17) de la traverse (34).

**23.** Machine combinée selon l'une au moins des revendications 19 à 22, caractérisée par le fait que chaque fût porteur (23) est muni d'un soc (35).

**24.** Machine combinée selon la revendication 23, caractérisée par le fait que le fût porteur (23) est disposé environ au milieu du soc (35) correspondant.

**25.** Machine combinée selon la revendication 22, 23 ou 24, caractérisée par le fait que le soc (35) est incliné vers l'avant et vers le bas.

**26.** Machine combinée selon l'une au moins des revendications 22 à 25, caractérisée par le fait que l'arête frontale (38) du soc (35) est affilée.

27. Machine combinée selon l'une au moins des revendications 22 à 26, caractérisée par le fait que le bord arrière (21) du soc (35) s'étend à peu près horizontalement.

28. Machine combinée selon l'une au moins des revendications 22 à 27, caractérisée par le fait que le bord arrière (21) du soc (35) est muni d'un organe de recouvrement (15).

29. Machine combinée selon la revendication 28, caractérisée par le fait que l'organe de recouvrement (15) est réalisé au moins partiellement en tôle.

30. Machine combinée selon la revendication 28, caractérisée par le fait que l'organe de recouvrement (15) est réalisé au moins partiellement dans un matériau élastique.

31. Machine combinée selon l'une au moins des revendications 22 à 30, caractérisée par le fait que le soc (35) est fixé à la traverse (34) au moyen de vis.

32. Machine combinée selon l'une au moins des revendications 24 à 31 et la revendication 23, caractérisée par le fait que les socs (35) sont disposés à peu près de manière contiguë.

33. Machine combinée selon l'une au moins des revendications précédentes, caractérisée par le fait que les arêtes frontales (8) des fûts porteurs (23) s'étendent entre la partie arrière des trajectoires (7) des outils (6) situés à proximité des fûts porteurs (23).

34. Machine combinée selon la revendication 33, caractérisée par le fait que les fûts porteurs (23) s'étendent vers l'avant et vers le bas et qu'au moins la partie de l'arête frontale (8) des fûts porteurs (23) située au-dessus du plan (13) horizontal passant par l'axe longitudinal (9) de l'arbre rotatif (5), est équipée d'un racleur (28), dont l'arête frontale (14) s'étend également entre les trajectoires (7) des outils (6) situés à proximité des fûts porteurs (23).

35. Machine combinée selon la revendication 34, caractérisée par le fait que l'arête frontale (14) des racleurs (28) s'étend de manière à peu près concentrique par rapport à l'arbre rotatif (5).

36. Machine combinée selon l'une au moins des revendications précédentes, caractérisée par le fait que les fûts porteurs (23) sont liés au châssis (1) de la machine de manière démontable.

# FIG. 1

FIG.2